# FASCICULE DE BREVET EUROPEEN

(11) **EP 1 264 999 B1**
(45) Date de publication et mention de la délivrance du brevet: **26.10.2005**
(21) Numéro de dépôt: 02291414.7
(22) Date de dépôt: 07.06.2002
(51) Int. Cl.: F15B 15/19, F15B 15/26, F16B 31/00, F15B 15/22

(54) **Mécanisme à libération controlée par un effet thermique**
Thermisch gesteuerter Entriegelungsmechanismus
Release mechanism controlled thermally

(30) Priorité: 08.06.2001 FR 0107558
(43) Date de publication de la demande: 11.12.2002
(73) Titulaire: ETIENNE LACROIX - TOUS ARTIFICES SA, 31600 Muret (FR)
(72) Inventeur: Valambois, Guy, 31700 Blagnac (FR); Soulier, Grégory, 31410 Longages (FR)
(74) Mandataire: Texier, Christian

(56) Documents cités:
- EP-A- 0 896 159
- FR-A- 2 801 649
- GB-A- 1 011 680
- US-A- 3 454 286
- US-A- 4 442 756
- US-A- 5 248 233
- US-A- 5 695 306

## Description

La présente invention concerne le domaine des mécanismes à libération contrôlée par un effet thermique.

La présente invention concerne en particulier, mais non exclusivement, les pyromécanismes, c'est à dire le domaine des mécanismes commandés par un effet pyrotechnique.

De nombreux mécanismes à libération contrôlée par un effet thermique ont déjà été proposés.

Le document US-3454286 décrit un mécanisme comprenant deux tubes concentriques interne et externe comprenant des nervures en saillie dans l'espace interne définie entre les deux tubes, un matériau fusible placé dans ledit intervalle entre les deux tubes, un matériau combustible qui remplit au moins une partie de l'espace centrale du tube interne et des moyens adaptés pour initier ledit matériau combustible afin d'assurer la fusion du matériau fusible et libérer ainsi mécaniquement les deux tubes.

La présente invention a maintenant pour but de proposer un dispositif présentant des propriétés supérieures à celles des dispositifs antérieurs connus.

La présente invention a en particulier pour but de proposer un dispositif présentant au repos une tenue mécanique élevée.

Les buts précités sont atteints dans le cadre de la présente invention grâce à un dispositif du type défini en revendication 1 annexée, laquelle est délimitée sous forme d'un préambule et d'une partie caractérisante, par rapport au document US-A-3 454 286.

Selon une caractéristique avantageuse de la présente invention, le matériau à bas point de fusion est disposé au moins sur une partie de l'interface entre les moyens à complément de forme pour interdire la libération du moyen de blocage, et par conséquent des éléments de structure, avant fusion dudit matériau.

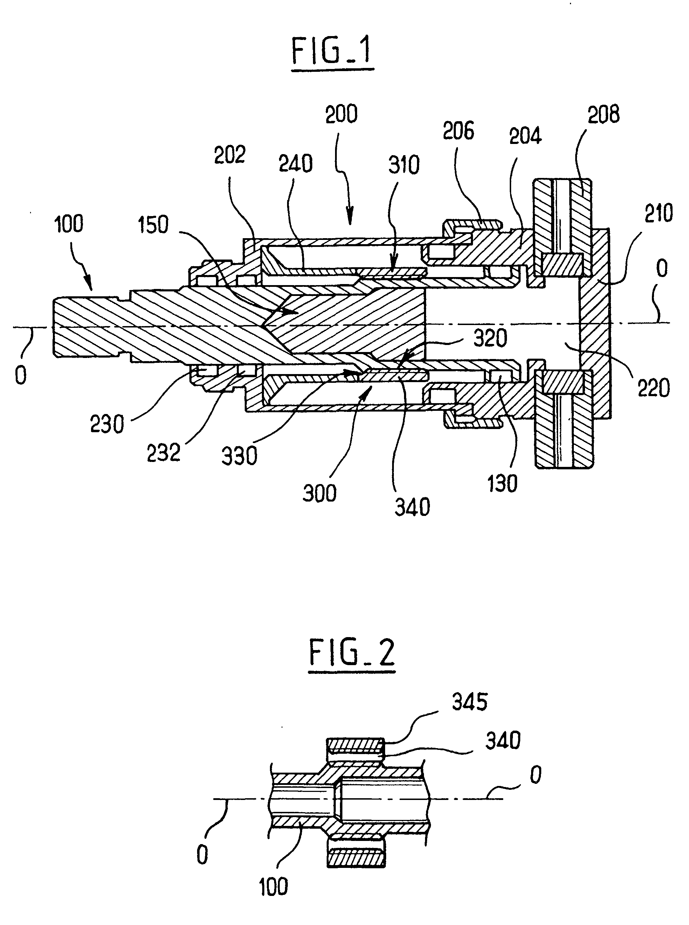

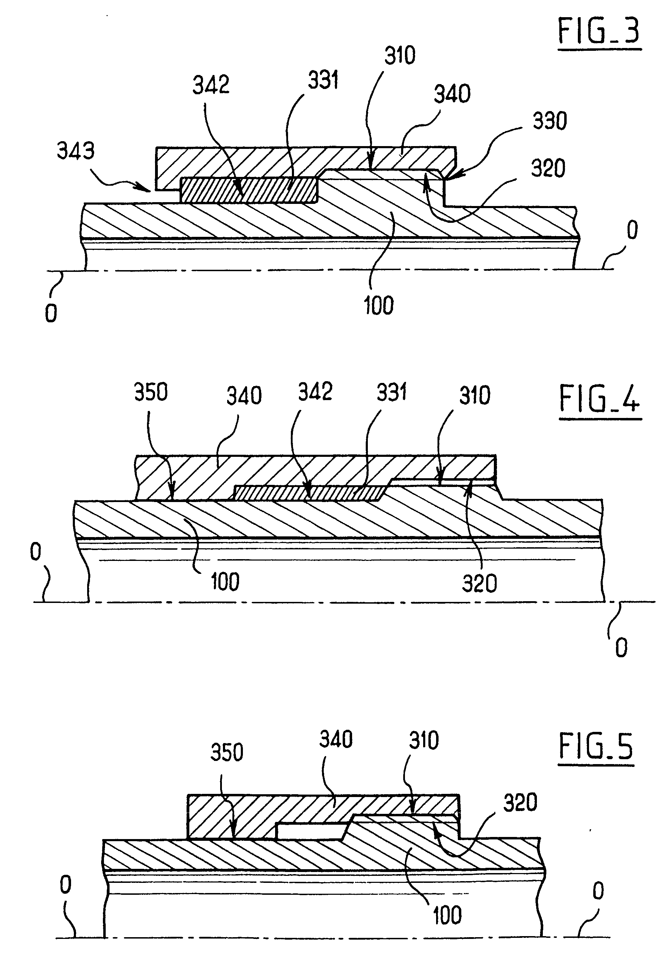

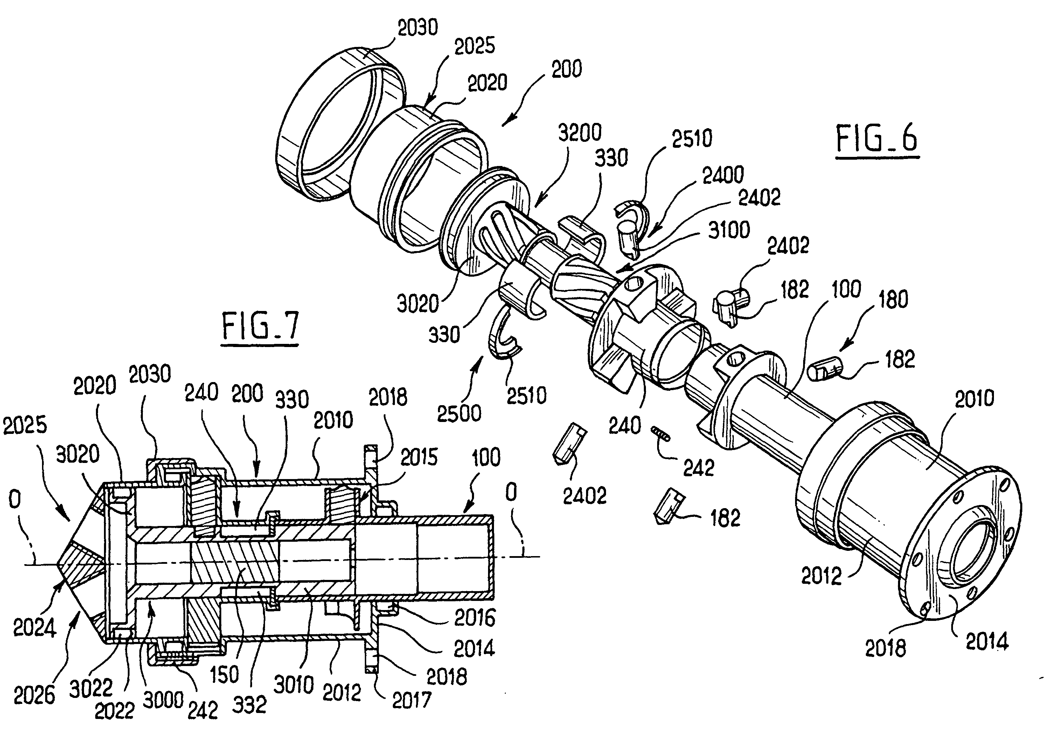

D'autres caractéristiques, buts et avantages de la présente invention apparaîtront à la lecture de la description détaillée qui va suivre, et en regard des dessins annexés, donnés à titre d'exemples non limitatifs et sur lesquels :
. la figure 1 représente une vue schématique, en coupe axiale longitudinale, d'un dispositif conforme à un mode de réalisation préférentiel de la présente invention,
. la figure 2 représente une vue partielle similaire, en coupe axiale longitudinale, d'une variante de réalisation conforme à la présente invention,
. les figures 3, 4, et 5 représentent trois variantes de réalisation conformes à la présente invention, et
. la figure 6 représente une vue en perspective éclatée d'une autre variante de réalisation conforme à la présente invention, tandis que la figure 7 représente une vue en coupe longitudinale de cette même variante.

On aperçoit sur la figure 1 annexée un dispositif conforme à la présente invention, qui comprend :
. un premier élément de structure 100,
. un deuxième élément de structure 200 et
. un moyen de blocage 300.

Le moyen de blocage 300 est formé par la combinaison
. d'au moins un ensemble comprenant des moyens à complément de forme formés avantageusement par, d'une part des filets 310 et d'autre part un taraudage complémentaire 320, liés respectivement aux deux éléments de structure 100 et 200, et
. d'un matériau 330 à bas point de fusion disposé au moins sur une partie de l'interface entre les filets 310 et le taraudage complémentaire 320 pour interdire la libération du moyen de blocage 300, et par conséquent des éléments de structure 100 et 200, avant fusion dudit matériau 330.

Les éléments de structure 100 et 200 peuvent faire l'objet de nombreux modes de réalisation.

Selon le mode de réalisation particulier illustré sur la figure 1 annexée, ces deux éléments 100 et 200 sont formés globalement de structures cylindriques concentriques centrées sur un axe O-O et ils sont par ailleurs susceptibles de translation relative selon l'axe O-O après libération du moyen de blocage 300.

Plus précisément l'élément 100 a la forme générale d'une tige centrale, tandis que l'élément 200 a la forme générale d'une chemise cylindrique qui entoure partiellement la tige 100.

Selon la figure 1, l'élément 200 est formé par assemblage de différentes pièces 202, 204, 206, 208, 210. Cependant l'invention n'est pas limitée à cette géométrie particulière. Lesdites pièces 202 à 210 ne seront donc pas décrites plus en détail par la suite.

On notera simplement que de préférence les pièces 202 à 210 définissent une chambre fermée 220 sur l'une des extrémités de la tige 100.

La structure ainsi formée peut constituer un ensemble de type vérin dans lequel la tige 100 forme un piston susceptible de translation relative contrôlée par rapport à la chemise 200 qui forme corps de vérin.

Des moyens d'étanchéité, tels que des joints toriques, peuvent être insérés entre les deux éléments 100 et 200. De tels moyens d'étanchétité peuvent être logés par exemple dans des gorges annulaires 130, 230, 232 formées dans l'un ou l'autre des deux éléments 100, 200 et débouchant sur l'interface entre ceux-ci.

L'invention n'est cependant pas limitée à des dispositifs dans lesquels les deux éléments de structure sont uniquement susceptibles de translation relative. Ainsi par exemple le mouvement de translation de la tige 100 peut être remplacé ou transformé en tout autre mouvement approprié, par exemple un mouvement oblique ou un mouvement relatif à rotation par rapport à l'élément 200, à l'aide d'un système vis/écrou ou équivalent.

Selon la représentation donnée sur la figure 1, les filets 310 sont prévus sur la surface extérieure d'un tronçon de la tige 100. Le taraudage 320 est prévu sur la surface interne d'un écrou 340. Et l'élément 200 est en appui contre l'écrou 340, par l'intermédiaire d'une entretoise 240.

L'entretoise 240 est formée d'une douille centrée sur l'axe O-O.

Le matériau à bas point de fusion 330 peut faire l'objet de nombreux modes de réalisation.

Il peut s'agir d'un métal.

Dans ce contexte, de préférence, le matériau 330 est choisi dans le groupe comprenant :
- Bi50/Pb28/Sn22 (pour une température de fusion de l'ordre de 95-110°C) ou
- In (pour une température de fusion de l'ordre de 156°C) ou
- Sn ou Sn85/Zn15 (pour une température de fusion de l'ordre de 200-250°C) ou
- Pb82,5/Cd17,5 ou
- Pb96/Sb4 (pour une température de fusion de l'ordre de 250-300°C).

L'utilisation d'un métal pour former le matériau 330 conduit à une brasure de l'écrou 340.

Cependant l'invention n'est pas limitée à un métal. Le matériau 330 peut être formé de tout autre matériau thermo-fusible susceptible de remplir la même fonction, par exemple un matériau à base de paraffine ou un alliage eutectique.

Dans le cadre de l'invention, les filets 310 et le taraudage complémentaire 320 sont formés de filets réversibles, c'est à dire de filets possédant un pas suffisant pour qu'une traction exercée sur l'écrou 340 et/ou sur la tige 100 soit motrice.

A titre d'exemple non limitatif, pour un diamètre interne d'écrou de 17,5 mm, on peut prévoir 15 filets au pas de 15 mm.

L'élément de chauffage susceptible d'opérer la fusion sur demande du matériau 330 peut faire l'objet de nombreux modes de réalisation.

Selon un mode de réalisation préférentiel, il s'agit d'un bloc de matériau pyrotechnique 150 intégré dans la structure.

Plus précisément encore selon le mode de réalisation préférentiel illustré sur la figure 1 annexée, le matériau pyrotechnique 150 est placé dans une chambre borgne axiale 152 formée dans la tige 100 et qui débouche dans la chambre 220.

La composition pyrotechnique 150 peut ainsi être formée de :
- Al + Fe₂O₃ ou
- Mg + Fe₂O₃ ou
- Al + CuO ou
- Mg + CuO.

Le fonctionnement du dispositif conforme à la présente invention, qui vient d'être décrit, est essentiellement le suivant.

Au repos, l'écrou 340 est bloqué sur la tige 100 par le matériau 330. La chemise 200 est en appui contre l'entretoise 240, elle même en appui contre l'écrou 340.

De ce fait la tige 100 ne peut être sollicitée vers l'extérieur de la chemise 200, soit vers la gauche, par rapport à la chemise 200, selon l'illustration donnée sur la figure 1.

Pour libérer le dispositif, il suffit de mettre en oeuvre la composition pyrotechnique 150 ou tout moyen de chauffage équivalent.

Après fusion du matériau 330, l'écrou 340 est libéré.

Un déplacement de la tige 100 par rapport à l'écrou 340 et à la chemise 200 est alors possible sous l'effet d'une force motrice adéquate. Celle-ci peut être formée par les gaz développés par la composition pyrotechnique 150 elle même dans la chambre 220.

On notera que lors de ce déplacement, si le jeu entre les filets 310 et le taraudage 320 le permet, le matériau 330 est laminé au niveau de l'interface entre les filets 310 et le taraudage 320.

Ce laminage permet de freiner le déplacement relatif entre les éléments 100 et 200. On obtient ainsi une libération contrôlée des contraintes mécanique de la structure.

On a illustré sur la figure 3 une variante de réalisation conçue spécifiquement pour renforcer un effet de freinage par laminage du matériau 330, lors de la fusion de ce dernier. On retrouve sur la figure 3 la tige 100 en prise, par un filetage 310/320 initialement bloqué par un matériau 330 noyant les filets, avec l'écrou 340. Cependant l'écrou illustré sur la figure 3 définit un logement 342 apte à loger une réserve 331 de matériau 330, lequel logement 342 débouche sur l'extérieur par un passage de section calibrée 343. Le logement 342 est défini en partie par un décrochement formé sur la tige 100. Ainsi, après fusion du matériau 330, un déplacement relatif entre les éléments 100 et 200 impose une réduction du volume du logement 342 qui entraîne un laminage du matériau 330 par le passage 343.

On notera que l'entretoise permet d'isoler thermiquement la chemise extérieure 200 par rapport à la zone de la composition pyrotechnique 150 susceptible d'être portée à température élevée.

La présente invention trouve notamment , mais non exclusivement application dans le domaine de l'industrie spatiale, par exemple sur les lanceurs ou les satellites.

Bien entendu la présente invention n'est pas limitée au mode de réalisation particulier qui vient d'être décrit, mais s'étend à toutes variantes conformes à son esprit.

En particulier selon une variante avantageuse de la présente invention, il peut être prévu des moyens évitant une rotation relative entre l'entretoise 240 et l'écrou 340 lors de la mise en oeuvre du dispositif.

Selon un premier mode de réalisation, comme illustré sur la figure 2, de tels moyens peuvent être formés de deux écrous en prise superposés, de pas inversés : 340 et 345. Un premier écrou 340 est en prise avec les filets 310 de la tige 100. Il est muni lui même de filets sur sa surface externe, en prise avec le deuxième écrou 345. Ce dernier sert d'appui à l'entretoise 240. Les filets des deux écrous 340 et 345 sont initialement bloqués à l'aide d'un matériau à bas point de fusion. Les pas des deux écrous 340 et 345 peuvent être identiques. Cependant cette caractéristique n'est pas impérative.

Selon un deuxième mode de réalisation, un roulement à billes ou équivalent, peut être intercalé entre l'écrou 340 et l'entretoise 240.

La combinaison du matériau à bas point de fusion 330 et des filets 310/320 permet de bénéficier, dans le cadre de la présente invention, d'une tenue mécanique élevée, au repos du dispositif.

On a illustré sur la figure 4 une variante de réalisation dans laquelle on retrouve la tige 100 en prise par filetage 310/320 avec un écrou 340 définissant un logement 342 propre à recevoir une réserve 331 de matériau 330 à bas point de fusion. Cependant selon la variante de la figure 4, le matériau 330 qui bloque le montage n'est pas placé au niveau des filets 310/320, mais au niveau d'une interface 350, cylindrique de révolution, formée entre la surface externe de la tige 100 et la surface interne de l'écrou 340, sur un tronçon distinct des filets 310/320.

On a illustré sur la figure 5 une autre variante de réalisation dans laquelle on retrouve la tige 100 en prise par filetage 310/320 avec un écrou 340. Ici l'écrou 340 ne définit pas de réserve pour le matériau à bas point de fusion, comme c'est le cas sur les figures 3 et 4. Cependant selon la variante de la figure 5, comme pour la figure 4, le matériau 330 qui bloque le montage n'est pas placé au niveau des filets 310/320, mais au niveau d'une interface 350, cylindrique de révolution, formée entre la surface externe de la tige 100 et la surface interne de l'écrou 340, sur un tronçon distinct des filets 310/320.

Bien entendu selon encore d'autres variantes, on peut prévoir de bloquer initialement le montage à l'aide d'un matériau à bas point de fusion 330 présent à la fois au niveau des filets 310/320 et au niveau d'une interface cylindrique 350.

On va maintenant décrire la variante de réalisation illustrée sur les figures 6 et 7.

Selon cette variante, le dispositif comprend deux éléments 100, 200 susceptibles de rotation relative autour de l'axe O-O.

Selon le mode de réalisation représenté sur les figures 6 et 7, l'élément 100 est formé d'une tige cylindrique creuse. Celle-ci est immobilisée à translation par rapport à l'élément 200, mais libre de rotation autour de l'axe O-O par rapport à ce même élément 200.

Pour cela, de préférence, la tige 100 est en appui d'un côté sur une entretoise 240 elle-même liée par rotation et à translation avec l'élément 200.

La liaison définie entre l'entretoise 240 et l'élément 200 peut être définie par tout moyen approprié.

De préférence, l'entretoise 240 est immobilisée à translation par pincement entre deux corps 2010, 2020 constituant l'essentiel du second élément 200. De plus, l'entretoise 240 est de préférence immobilisée à rotation par rapport au corps 200 à l'aide d'une goupille 242, par exemple orientée parallèlement à l'axe O-O et qui interfère à la fois avec l'entretoise 240 et l'élément 200.

De préférence, la tige cylindrique creuse 100 est en appui de l'autre côté sur un flasque 2014 de l'élément 200.

Plus précisément, on a représenté sur la figure 7 un jeu entre la tige 100 et le flasque 2014, sous la référence 2015. Cependant, le jeu ou logement ainsi formé est comblé en pratique par un roulement ou tout moyen équivalent facilitant une rotation relative entre la tige 100 et l'élément 200.

L'élément 200 peut faire l'objet de nombreuses géométries et variantes de réalisation.

Selon le mode de réalisation particulier et non limitatif représenté sur les figures annexées, l'élément 200 est formé par assemblage de deux corps 2010 et 2020 à l'aide d'un écrou ou équivalent 2030.

Plus précisément encore, de préférence, chacun de ces deux corps 2010, 2020 comprend une enveloppe cylindrique 2012, 2022 centrée sur l'axe O-O, complémentée respectivement par un flasque d'extrémité 2014, 2024 perpendiculaire à l'axe O-O.

On notera que le flasque 2014 possède un passage central traversant conçu pour recevoir à déplacement la tige 100. Le cas échéant, les moyens d'étanchéité peuvent être prévus au niveau de l'interface entre le flasque 2014 et la tige 100. Il peut s'agir par exemple d'un joint torique ou tout moyen équivalent positionné dans une gorge annulaire 2016 formée sur le flasque 2014.

Le flasque 2014 possède de préférence une collerette extérieure 2017 pourvue d'une pluralité de perçages traversant 2018 conçus pour assurer la fixation du dispositif.

Le flasque 2014 est quant à lui conçu pour porter au moins un initiateur (ce dernier étant non représenté pour simplifier l'illustration).

Plus précisément encore, de préférence, le flasque 2024 possède deux logements 2025, 2026 conçus pour recevoir chacun un initiateur, afin de redondance et effet de fiabilité.

Le dispositif illustré sur illustré sur les figures 6 et 7 annexées comprend en outre un piston 3000 disposé à l'intérieur de l'élément 200 et intercalé fonctionnement en série entre les deux éléments 100 et 200.

De préférence, le piston 3000 comprend un fût 3010 solidaire d'une collerette 3020.

Le fût 3010 est conçu pour être engagé dans un canal central de l'élément 100 pour autoriser à la fois une translation et une rotation relative entre ces éléments.

Le fût 3010 possède lui-même un logement central borgne qui débouche sur le flasque 2024 et qui reçoit une composition pyrotechnique fortement exothermique 150.

La collerette 3020 précitée du piston 3000 est adjacente au flasque 2024. Elle assure une étanchéité entre le piston 3000 et le corps 200 grâce à tout moyen approprié, par exemple à l'aide d'un joint torique engagé dans une gorge annulaire périphérique 3022 formée sur la surface extérieure de la collerette 3020.

Le piston 3000 possède une série de filets extérieurs sur un tronçon 3100. Ceux-ci sont adaptés pour coopérer avec des moyens complémentaires 180 liés à la tige 100 pour transformer un mouvement de translation du piston 3000 selon l'axe O-O en un mouvement de rotation de la tige 100, autour de l'axe O-O, par rapport au piston 3000.

Les moyens 180 prévus à cet effet sur la tige 100 peuvent être formés d'un taraudage.

Cependant, comme on l'a illustré sur les figures 6 et 7, il s'agit de préférence d'au moins un doigt 182 orienté radialement par rapport à l'axe O-O, en prise avec la tige 100 et engagé dans les filets 3100.

Plus précisément encore, il s'agit selon le mode de réalisation préférentiel de trois doigts 182 équi-répartis autour de l'axe O-O. Bien entendu, l'invention n'est pas limitée à ce nombre de doigts ni à cette disposition particulière.

Plus précisément encore, les trois doigts précités 182 sont montés à coulissement radial dans un perçage radial complémentaire formé sur la tige 100.

Le piston 3000 comporte en outre un second jeu de filets sur un tronçon 3200. Ceux-ci sont adaptés pour coopérer avec des moyens complémentaires 2400 liés à l'entretoise 240 et au corps 200.

Les filets 3200 présentent un pas inverse des filets 3100.

Ces moyens ont pour fonction de transformer un mouvement de translation du piston 3000 selon l'axe O-O en rotation du piston 3000 autour de l'axe O-O par rapport à l'entretoise 240 et à l'élément 200.

Les moyens 2400 précités prévus à cet effet sur l'entretoise 240 peuvent être formés d'un taraudage. Cependant, il s'agit de préférence d'au moins un doigt 2402 orienté radialement par rapport à l'axe O-O, en prise avec l'entretoise 240 et engagé dans les filets 3200.

Plus précisément encore, il s'agit de préférence de trois doigts 2402 équi-répartis autour de l'axe O-O.

Plus précisément encore, les doigts 2402 sont montés à coulissement radial dans un perçage radial complémentaire formé dans l'entretoise 240.

Le dispositif illustré sur les figures 6 et 7 comporte en outre un massage de matériau à bas point de fusion 330 formant brasure entre le piston 3000 et l'entretoise 240. Cette masse 330 de matériau à bas point de fusion est placée dans un logement 332 formé entre le piston 3000 et l'entretoise 240.

Plus précisément encore, ce logement 332 est formé d'une gorge périphérique réalisée sur la surface extérieure du piston 3000 entre les deux tronçons de filets 3100 et 3200.

On notera à l'examen des figures 6 et 7 annexées que le dispositif peut être complété par une bague 2500 (ou plus précisément deux demi bagues complémentaires 2510 pour des questions de fabrication et d'assemblage) immobilisée au moins à translation par pincement entre l'entretoise 240 et la tige 100 et disposée sur une extrémité du logement 332. L'homme de l'art comprendra que cette bague 2500 impose un laminage du matériau à bas point de fusion 330 lors de la mise en oeuvre du dispositif, puisque lors d'une translation du piston 3000 selon l'axe O-O par rapport à l'élément 200, le matériau à bas point de fusion 330 est obligé de franchir la bague 2500 par le passage calibré de faible dimension défini entre la bague 2500 et la surface extérieure du piston 3000.

Le fonctionnement du dispositif qui vient d'être décrit est essentiellement le suivant.

Pour mettre en oeuvre le dispositif, l'un au moins des initiateurs placés dans les cavités 2025 ou 2026 est activé. L'initiation est ainsi transmise à la composition pyrotechnique 150.

Le matériau 330 a bas point de fusion atteint son point de ramollissement. Le piston 3000 est ainsi libéré par rapport à l'entretoise 240 et à l'élément 200. Par ailleurs, les gaz générés par les initiateurs placés dans les cavités 2025 ou 2026, ou par la composition pyrotechnique 150, ou encore tout autre moyen externe adéquat sollicite le piston 3000 à translation selon l'axe O-O (vers la droite selon la représentation de la figure 7).

Ce déplacement est freiné par laminage du matériau de brasure 330 lors de son franchissement de la bague 2500.

La coopération définie entre les filets 3200 et les doigts 2402 transforme le mouvement de translation du piston 3000 selon l'axe O-O en un mouvement de rotation autour de ce même axe.

De plus, la translation du piston 3000 est transformée par la coopération définie entre les filets 3100 et les doigts 182 en un mouvement de rotation relatif de la tige 100.

De plus, la rotation du piston 3000 est transmise à la tige 100.

Ainsi, les deux transformations translation/rotation précitées définies respectivement entre les moyens 3200 et 2402 d'une part, 3100 et 182 d'autre part se cumulent. On obtient ainsi une amplification du mouvement de rotation de la tige 100.

On notera que le dispositif est à nouveau bloqué par le matériau 330, après refroidissement de celui-ci.

Un tel dispositif peut donner lieu à de nombreuses utilisations.

Selon une variante, on peut par exemple remplacer les filets 3100, 3200 et les doigts complémentaires 182, 2402 précités par un taraudage formé respectivement sur la tige 100 et sur l'entretoise 240 et des doigts complémentaires d'orientation radiale portés par le piston 3000.

## Revendications

1. Dispositif formant mécanisme à libération contrôlée, comprenant :
. deux éléments de structure (100, 200) susceptibles de déplacement relatif, et
. un moyen de blocage (300) apte à interdire initialement le déplacement relatif entre les deux éléments de structure (100, 200), lequel moyen de blocage (300) comprend
un matériau à bas point de fusion (330) disposé au moins sur une partie de l'interface (310/320, 350) entre deux pièces liées respectivement aux deux éléments de structure (100, 200) pour interdire la libération du moyen de blocage (300), et par conséquent des éléments de structure (100, 200), avant fusion dudit matériau, **caractérisé par le fait que** le moyen de blocage comprend au moins un ensemble comprenant des moyens à complément de forme, de configuration hélicoïdale (310, 320), liés respectivement aux deux éléments de structure (100, 200), que les moyens à complément de forme, de configuration hélicoïdale comprennent d'une part des filets (310), et d'autre part un taraudage (320) complémentaire liés respectivement aux deux éléments (100, 200) et que les filets (310) et le taraudage complémentaire (320) sont formés de filets réversibles, c'est à dire de filets possédant un pas suffisant pour qu'une traction soit motrice, après fusion du matériau à bas point de fusion (330).

2. Dispositif selon la revendication 1, **caractérisé par le fait que** le matériau à bas point de fusion (330) est disposé au moins sur une partie de l'interface entre les moyens à complément de forme (310, 320) pour interdire la libération du moyen de blocage, et par conséquent des éléments de structure (100, 400), avant fusion dudit matériau (330).

3. Dispositif selon l'une des revendications 1 ou 2, **caractérisé par le fait que** le taraudage (320) est formé sur un écrou (340).

4. Dispositif selon l'une des revendications 1 à 3, **caractérisé par le fait qu'**une entretoise (240) est intercalée entre l'un des éléments de structure (200) et le moyen de blocage (300).

5. Dispositif selon l'une des revendications 1 à 4, **caractérisé par le fait que** le matériau à bas point de fusion (330) est formé d'un métal.

6. Dispositif selon la revendication 5, **caractérisé par le fait que** le matériau à bas point de fusion (330) est choisi dans le groupe comprenant :
- Bi50/Pb28/Sn22 (pour une température de fusion de l'ordre de 95-110°C) ou
- In (pour une température de fusion de l'ordre de 156°C) ou
- Sn ou Sn85/Zn15 (pour une température de fusion de l'ordre de 200-250°C) ou
- Pb82,5/Cd17,5 ou
- Pb96/Sb4 (pour une température de fusion de l'ordre de 250-300°C).

7. Dispositif selon l'une des revendications 1 à 4, **caractérisé par le fait que** le matériau à bas point de fusion (330) est formé d'un matériau à base de paraffine ou d'un alliage eutectique.

8. Dispositif selon l'une des revendications 1 à 7, **caractérisé par le fait qu'**il comprend en outre un moyen de chauffage (150) apte à provoquer sélectivement la fusion du matériau à bas point de fusion (330).

9. Dispositif selon la revendication 8, **caractérisé par le fait que** l'élément de chauffage (150) est formé d'un matériau pyrotechnique (150) intégré dans la structure.

10. Dispositif selon l'une des revendications 1 à 9, **caractérisé par le fait que** les deux éléments de structure (100, 200) sont susceptibles de translation relative.

11. Dispositif selon l'une des revendications 1 à 10, **caractérisé par le fait qu'**il comprend des moyens (340, 345) évitant une rotation relative entre le moyen de blocage (300) et l'un des éléments de structure (200) lors de la mise en oeuvre du dispositif.

12. Dispositif selon la revendication 11, **caractérisé par le fait que** les moyens (340, 345) évitant une rotation relative comprennent deux écrous en prise superposés, de pas inversés (340, 345).

13. Dispositif selon la revendication 11, **caractérisé par le fait que** les moyens (340, 345) évitant une rotation relative comprennent un roulement à billes ou équivalent.

14. Dispositif selon l'une des revendications 1 à 9, **caractérisé par le fait que** les deux éléments de structure (100, 200) sont susceptibles de rotation relative.

15. Dispositif selon la revendication 14, **caractérisé par le fait qu'**il comprend un piston (3000) susceptible de translation par rapport aux éléments de structure (100, 200) et muni de filets (3100) en prise avec des moyens (182) liés à un élément de structure (100).

16. Dispositif selon la revendication 15, **caractérisé par le fait que** le piston (3000) comprend en outre une seconde série de filets (3200) en prise avec des moyens (2402) liés au second élément de structure (200).

17. Dispositif selon la revendication 16, **caractérisé par le fait que** les deux séries de filets (3100, 3200) ont des pas inversées.

18. Dispositif selon l'une des revendications 14 à 17, **caractérisé par le fait que** les moyens (182, 2402) en prise avec les filets (3100, 3200) comprennent au moins un doigt radial.

19. Dispositif selon l'une des revendications 15 à 18, **caractérisé par le fait que** les filets (3100, 3200) sont formés de doigts radiaux solidaires du piston (3000).

20. Dispositif selon l'une des revendications 1 à 19, **caractérisé par le fait que** l'un au moins des éléments de structure (100, 400) définit un logement (342) apte à loger une réserve (331) de matériau (330) à bas point de fusion, lequel logement (342) débouche sur l'extérieur par un passage de section calibrée (343) et est adapté pour réduire son volume lors d'un déplacement relatif entre les éléments de structure (100, 200) de sorte que ce déplacement entraîne un laminage du matériau (330) par le passage (343).

21. Dispositif selon l'une des revendications 1 à 20, **caractérisé par le fait qu'**il comprend du matériau (330) à bas point de fusion au niveau d'une interface (350) différente des filets (310/320).

## Patentansprüche

1. Vorrichtung, die einen Mechanismus zur gesteuerten Freisetzung bildet, mit:
- zwei Bauelementen (100, 200), die zur relativen Bewegung imstande sind, und
- einem Blockierungsmittel (300), das geeignet ist, anfangs die relative Bewegung zwischen den beiden Bauelementen (100, 200) zu unterbinden, wobei das Blockierungsmittel (300)
ein Material mit niedrigem Schmelzpunkt (330) umfaßt, das wenigstens auf einem Teil der Trennfläche (310/320, 350) zwischen zwei Teilen angeordnet ist, die mit dem jeweiligen der beiden Bauelemente (100, 200) verbunden sind, um vor dem Schmelzen des genannten Materials die Freisetzung des Blockierungsmittels (300) und demzufolge der Bauelemente (100, 200) zu unterbinden, **dadurch gekennzeichnet,**
**daß** das Blockierungsmittel wenigstens eine Baugruppe umfaßt, die Mittel komplementärer Form mit wendelförmiger Konfiguration (310, 320) umfaßt, die mit dem jeweiligen der beiden Bauelemente (100, 200) verbunden sind,
**daß** die Mittel komplementärer Form mit wendelförmiger Konfiguration einerseits Gewindegänge (310) und andererseits ein komplementäres Muttergewinde (320) umfassen, die mit dem jeweiligen der beiden Elemente (100, 200) verbunden sind, und
**daß** die Gewindegänge (310) und das komplementäre Muttergewinde (320) aus reversiblen Gewindegängen gebildet sind, das heißt aus Gewindegängen, die eine Steigung aufweisen, die ausreicht, daß nach dem Schmelzen des Materials mit niedrigem Schmelzpunkt (330) eine Zugwirkung antreibend ist.

2. Vorrichtung nach Anspruch 1, **dadurch gekennzeichnet, daß** das Material mit niedrigem Schmelzpunkt (330) wenigstens auf einem Teil der Trennfläche zwischen den Mitteln komplementärer Form (310, 320) angeordnet ist, um die Freisetzung der Blockierungsmittel und demzufolge der Bauelemente (100, 400) vor dem Schmelzen des genannten Materials (330) zu unterbinden.

3. Vorrichtung nach einem der Ansprüche 1 oder 2, **dadurch gekennzeichnet, daß** das Muttergewinde (320) auf einer Mutter (340) ausgebildet ist.

4. Vorrichtung nach einem der Ansprüche 1 bis 3, **dadurch gekennzeichnet, daß** ein Zwischenstück (240) zwischen einem der Bauelemente (200) und dem Blockierungsmittel (300) angeordnet ist.

5. Vorrichtung nach einem der Ansprüche 1 bis 4, **dadurch gekennzeichnet, daß** das Material mit niedrigem Schmelzpunkt (330) aus einem Metall gebildet ist.

6. Vorrichtung nach Anspruch 5, **dadurch gekennzeichnet, daß** das Material mit niedrigem Schmelzpunkt (330) aus der Gruppe ausgewählt ist, die
- Bi50/Pb28/Sn22 (für eine Schmelztemperatur in der Größenordnung von 95-110°C, oder
- In (für eine Schmelztemperatur in der Größenordnung von 156°C), oder
- Sn oder Sn85/Zn15 (für eine Schmelztemperatur in der Größenordnung von 200-250°C), oder
- Pb82,5/Cd17,5, oder
- Pb96/Sb4 (für eine Schmelztemperatur in der Größenordnung von 250-300°C)
umfaßt.

7. Vorrichtung nach einem der Ansprüche 1 bis 4, **dadurch gekennzeichnet, daß** das Material mit niedrigem Schmelzpunkt (330) aus einem Material auf der Grundlage von Paraffin oder einer eutektischen Legierung gebildet ist.

8. Vorrichtung nach einem der Ansprüche 1 bis 7, **dadurch gekennzeichnet, daß** sie außerdem ein Beheizungsmittel (150) umfaßt, das dazu geeignet ist, selektiv das Schmelzen des Materials mit niedrigem Schmelzpunkt (330) hervorzurufen.

9. Vorrichtung nach Anspruch 8, **dadurch gekennzeichnet, daß** das Beheizungselement (150) aus einem pyrotechnischen Material (150) gebildet ist, das in den Aufbau integriert ist.

10. Vorrichtung nach einem der Ansprüche 1 bis 9, **dadurch gekennzeichnet, daß** die beiden Bauelemente (100, 200) zur relativen Translation imstande sind.

11. Vorrichtung nach einem der Ansprüche 1 bis 10, **dadurch gekennzeichnet, daß** sie Mittel (340, 345) umfaßt, die eine relative Drehung zwischen dem Blockierungsmittel (300) und einem der Bauelemente (200) während des Betreibens der Vorrichtung verhindern.

12. Vorrichtung nach Anspruch 11, **dadurch gekennzeichnet, daß** die Mittel (340, 345), die eine relative Drehung verhindern, zwei übereinanderliegende, in Eingriff stehende Muttern (340, 345) mit umgekehrter Steigung umfassen.

13. Vorrichtung nach Anspruch 11, **dadurch gekennzeichnet, daß** die Mittel (340, 345), die eine relative Drehung verhindern, ein Kugellager oder dergleichen umfassen.

14. Vorrichtung nach einem der Ansprüche 1 bis 9, **dadurch gekennzeichnet, daß** die beiden Bauelemente (100, 200) zur relativen Drehung imstande sind.

15. Vorrichtung nach Anspruch 14, **dadurch gekennzeichnet, daß** sie einen Kolben (3000) umfaßt, der zur Translationsbewegung bezüglich der Bauelemente (100, 200) imstande ist und mit Gewindegängen (3100) versehen ist, die mit Mitteln (182) in Eingriff stehen, die mit einem Bauelement (100) verbunden sind.

16. Vorrichtung nach Anspruch 15, **dadurch gekennzeichnet, daß** der Kolben (3000) außerdem eine zweite Reihe von Gewindegängen (3200) umfaßt, die mit Mitteln (2402) in Eingriff stehen, die mit dem zweiten Bauelement (200) verbunden sind.

17. Vorrichtung nach Anspruch 16, **dadurch gekennzeichnet, daß** zwei Reihen von Gewindegängen (3100, 3200) umgekehrte Steigung haben.

18. Vorrichtung nach einem der Ansprüche 14 bis 17, **dadurch gekennzeichnet, daß** die Mittel (182, 2402), die mit den Gewindegängen (3100, 3200) in Eingriff stehen, wenigstens einen radialen Finger umfassen.

19. Vorrichtung nach einem der Ansprüche 15 bis 18, **dadurch gekennzeichnet, daß** die Gewindegänge (3100, 3200) von radialen Fingern gebildet sind, die einstückig mit dem Kolben (3000) sind.

20. Vorrichtung nach einem der Ansprüche 1 bis 19, **dadurch gekennzeichnet, daß** wenigstens eines der Bauelemente (100, 400) einen Sitz (342) definiert, der dazu geeignet ist, eine Reserve (331) an Material (330) mit niedrigem Schmelzpunkt aufzunehmen, wobei dieser Sitz (342) nach außen durch einen Kanal mit kalibriertem Querschnitt (343) mündet und dazu eingerichtet ist, sein Volumen während einer Relativbewegung zwischen den Bauelementen (100, 200) zu reduzieren, derart, daß diese Bewegung ein Auspressen des Materials (330) durch den Kanal (343) betreibt.

21. Vorrichtung nach einem der Ansprüche 1 bis 20, **dadurch gekennzeichnet, daß** sie Material (330) mit niedrigem Schmelzpunkt auf Höhe einer Trennfläche (350) aufweist, die von den Gewindegängen (310/320) verschieden ist.

## Claims

1. A device forming a controlled-release mechanism, the device comprising:
· two structural elements (100, 200) suitable for relative movement; and
· locking means (300) suitable initially for preventing relative movement between the two structural elements (100, 200), which locking means (300) comprises a low-melting point material (330) disposed at least in part at an interface (310/320, 350) between two parts connected respectively to the two structural elements (100, 200) to prevent the locking means (300) being released, and consequently to prevent the structural elements (100, 200) being released, prior to said material melting, the device being **characterized by** the facts that the locking means comprise at least one set of complementary shape means (310, 320) of helical configuration associated with respective ones of the two structural elements (100, 200), that the complementary shape means of helical configuration have both threads (310) and complementary tapping (320) associated with respective ones of the two structural elements (100, 200), and that the threads (310) and the complementary tapping (320) constitute reversible threads, i.e. threads of a pitch that is large enough to enable traction to drive unscrewing once the low-melting point material (330) has melted.

2. A device according to claim 1, **characterized by** the fact that the low-melting point material (330) is disposed at least on a portion of the interface between the complementary shape means (310, 320) to prevent release of the locking means, and consequently to prevent release of the structural elements (100, 200) prior to said material (330) melting.

3. A device according to claim 1 or claim 2, **characterized by** the fact that the tapping (320) is formed in a nut (340).

4. A device according to any one of claims 1 to 3, **characterized by** the fact that a spacer (240) is interposed between one of the structural elements (200) and the locking means (300).

5. A device according to any one of claims 1 to 4, **characterized by** the fact that the low-melting point material (330) is formed by a metal.

6. A device according to claim 5, **characterized by** the fact that the low-melting point material (330) is selected from the group comprising:
· Bi50/Pb28/Sn22 (for a melting temperature of about 95°C to 110°C;
· In (for a melting temperature of about 156°C);
· Sn or Sn85/Zn15 (for a melting temperature of about 200°C to 250°C);
· Pb82.5/Cd17.5; or
· Pb96/Sb4 (for a melting temperature of about 250°C to 300°C).

7. A device according to any one of claims 1 to 4, **characterized by** the fact that the low-melting point material (330) is formed by a material based on paraffin or on a eutectic alloy.

8. A device according to any one of claims 1 to 7, **characterized by** the fact that it further comprises heater means (150) suitable for selectively causing the low-melting point material (330) to melt.

9. A device according to claim 8, **characterized by** the fact that the heater element (150) is formed by a pyrotechnic material (150) integrated in the structure.

10. A device according to any one of claims 1 to 9, **characterized by** the fact that the two structural elements (100, 200) are suitable for moving in relative translation.

11. A device according to any one of claims 1 to 10, **characterized by** the fact that it includes means (340, 345) for preventing relative rotation between the locking means (300) and one of the structural elements (200) when the device is operated.

12. A device according to claim 11, **characterized by** the fact that the means (340, 345) preventing relative rotation comprise two mutually-engaged superposed nuts having opposite pitches (340, 345).

13. A device according to claim 11, **characterized by** the fact that the means (340, 345) preventing relative rotation comprise a ball bearing or the equivalent.

14. A device according to any one of claims 1 to 9, **characterized by** the fact that the two structural elements (100, 200) are suitable for moving in relative rotation.

15. A device according to claim 14, **characterized by** the fact that it includes a piston (3000) suitable for moving in translation relative to the structural elements (100, 200) and provided with threads (3100) engaging means (182) connected to a structural element (100).

16. A device according to claim 15, **characterized by** the fact that the piston (3000) further comprises a second series of threads (3200) engaged with means (2402) connected to the second structural element (200).

17. A device according to claim 16, **characterized by** the fact that the two series of threads (3100, 3200) are of opposite pitches.

18. A device according to any one of claims 14 to 17, **characterized by** the fact that the means (182, 2402) engaged with the threads (3100, 3200) comprise at least one radial finger.

19. A device according to any one of claims 15 to 18, **characterized by** the fact that the threads (3100, 3200) are constituted by radial fingers secured to the piston (3000).

20. A device according to any one of claims 1 to 19, **characterized by** the fact that at least one of the structural elements (100, 200) defines a housing (342) suitable for housing a supply (331) of low-melting point material (330), which housing (342) opens to the outside via a passage (343) of calibrated section and is suitable for reducing its volume during relative movement between the structural elements (100, 200) such that said movement causes the material (330) to be throttled by the passage (343).

21. A device according to any one of claims 1 to 20, **characterized by** the fact that it has the low-melting point material (330) at an interface (350) other than the interface between the threads (310/320).
